# EUROPEAN PATENT APPLICATION

(11) **EP 4 576 255 A1**
(43) Date of publication of application: **25.06.2025**
(21) Application number: 24857777.7
(22) Date of filing: 10.04.2024
(51) Int. Cl.: H01M 4/38, H01M 4/36, H01M 4/62, H01M 4/48, H01M 4/485, H01M 10/0525

(54) **NEGATIVE ELECTRODE MATERIAL AND BATTERY**

(30) Priority: 31.08.2023 CN 202311125354
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: AN, Weili, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Winter, Brandl - Partnerschaft mbB
(86) International application number: PCT/CN2024/086922
(87) International publication number: WO 2025/044227

(57) **Abstract**

The present disclosure relates to anode material and battery. The anode material includes a secondary particle, and the secondary particle includes silicon primary nanoparticles; the silicon primary nanoparticles include at least one silicon grain, an average particle size of the silicon grains is Ds nm, and an average particle size of the silicon primary nanoparticles is Dn nm; and a crystallinity of the silicon primary nanoparticles is A, the A is equal to Dn/Ds, and the A is equal to or greater than 1 and equal to or less than 200. By exploring a relationship between the size of the silicon primary nanoparticles and the size of the silicon grains, the problem of stress concentration generated by the silicon primary nanoparticles in lithium intercalation/deintercalation can be reduced, correspondingly the structural stability of the anode material is improved, and the expansion rate of the anode material is reduced, thereby improving the electrochemical performance and cycle performance of the anode material.

## Description

The present application claims the priority of a Chinese patent application No. 202311125354.4, filed to China National Intellectual Property Administration on August 31, 2023, with the title of "Anode material, Preparation Method thereof and Battery", the entire contents of which are incorporated herein by reference.

### Technical Field

The present disclosure relates to the technical field of anode materials, and specifically, particularly relates to anode material and battery.

### Background

Lithium-ion batteries, due to the advantages of high energy density, high output power, long cycle life and low environmental pollution, have been widely used in electric vehicles and consumer electronics.

In order to improve the energy density of batteries, research and development of silicon anode materials are increasingly mature. However, the silicon anode materials have large volume expansion (>300%) in a lithium intercalation/deintercalation process, and the silicon anode materials will be pulverized and fall from current collectors in a charge and discharge process to result in the loss of electrical touch between active substances and the current collectors, leading to deterioration of electrochemical performance, decrease of capacity attenuation and cycle stability, and difficulty in realizing commercial application. In order to improve the electrical conductivity and cycle stability of the silicon anode materials, carbon coating can be used. Existing carbon coating preparation methods have complicated steps, and mere carbon coating cannot effectively improve the electrochemical performance of silicon-carbon anodes.

On this basis, it is urgent to develop a silicon-carbon anode material having long cycle and low expansion performance.

### SUMMARY

The present disclosure proposes an anode material and a battery, such that the anode material has excellent cycle stability and good expansion performance.

In a first aspect, the present disclosure provides an anode material. The anode material includes a secondary particle, and the secondary particle includes silicon primary nanoparticles.

The silicon primary nanoparticles include at least one silicon grain, an average particle size of the silicon grains is Ds nm, and an average particle size of the silicon primary nanoparticles is Dn nm.

A crystallinity of the silicon primary nanoparticles is A, the A is equal to Dn/Ds, and the A is equal to or greater than 1 and equal to or less than 200.

Technical solutions of the present disclosure at least have the following beneficial effects.

According to the anode material provided by the present disclosure, by exploring a relationship between the size of the silicon primary nanoparticles and the size of the silicon grains, at the same silicon primary nanoparticle size, control of the crystallinity of the silicon primary nanoparticles can better reduce the problem of stress concentration caused by the silicon primary nanoparticles in a lithium intercalation/deintercalation process, which is conducive to uniform release of stress, guarantees the structural stability of the silicon primary nanoparticles, and reduces particle pulverization. At the same primary particle size, when the crystallinity A of the silicon primary nanoparticles is too large, it is indicated that the size of the silicon grains is too small. When the size of the silicon grains is too small, grain boundaries between the silicon grains will gradually disappear in a lithiation process, and large-size grains are formed eventually, namely electrochemical sintering is realized. After the electrochemical sintering, the grain boundaries between the silicon grains disappear, and the silicon grains grow. After lithium intercalation of the anode material, the local stress of the silicon primary nanoparticles is increased, and the structural instability of the anode material is increased, leading to decrease of the cycle performance and capacity of the anode material.

### Brief Description of the Drawings

Fig. 1 is a structural schematic diagram of an anode material provided in an embodiment;
Fig. 2a and Fig. 2b are structural schematic diagrams of silicon primary nanoparticles in an anode material provided in an embodiment, respectively;
Fig. 3a and Fig. 3b are another structural schematic diagrams of silicon primary nanoparticles in an anode material provided in an embodiment, respectively;
Fig. 4 is a schematic diagram of a preparation method for an anode material provided in an embodiment;
Fig. 5 is a scanning electron microscope image of an anode material provided in Embodiment 1;
Fig. 6 is an XRD pattern of the anode material provided in Embodiment 1; and
Fig. 7 shows a cycle performance curve of the anode material provided in Embodiment 1.

### Detailed Description of the Embodiments

In order to make the technical solutions of the present disclosure better understood, the embodiments of the present disclosure are described in detail below in conjunction with the accompanying drawings.

It should be clear that the embodiments described are merely a part of the embodiments of the present disclosure, rather than all of the embodiments. Based on the embodiments of the present disclosure, all other embodiments obtained by those of ordinary skill in the art without exerting creative effort fall within the scope of protection of the present disclosure.

Terms used in the embodiments of the present disclosure are only for the purpose of describing specific embodiments and are not intended to limit the present disclosure. The terms "a", "said", and "the" in a singular form used in the embodiments and attached claims of the present disclosure are also intended to include plural references, unless other meanings are clearly indicated herein.

It should be understood that the term "and/or" used herein merely shows an association relationship describing associated objects, indicating that three kinds of relationships may present. For example, A and/or B may be expressed in three situations, including separate presence of A, simultaneous presence of A and B, and separate presence of B. In addition, the character "/" herein generally means that former and latter associated objects have an "or" relationship.

At present, in lithium-ion batteries, anode materials are one of key materials affecting the charge and discharge performance. In order to improve the energy density of batteries, research and development of high-capacity anode materials are increasingly mature. However, these anode materials have large volume expansion in an alloying process with lithium, and the anode materials will be pulverized and fall from current collectors in a charge and discharge process to result in the loss of electrical touch between the anode materials and the current collectors, leading to deterioration of electrochemical performance of batteries prepared from the anode materials, decrease of capacity attenuation and cycle stability, and difficulty in realizing commercial application.

Silicon materials will have macrostructural changes in a lithium intercalation/deintercalation process, and these changes are closely associated with the grain size of the silicon materials, the size of silicon particles and the size of a constructed secondary particle. At present, silicon grains, silicon primary particles and a secondary particle are lack of a suitable balance point for the size proportion, leading to stress concentration of silicon-containing anode materials in a lithium intercalation/deintercalation process, easy breakage of anode material particles, and poor structural stability of the anode materials.

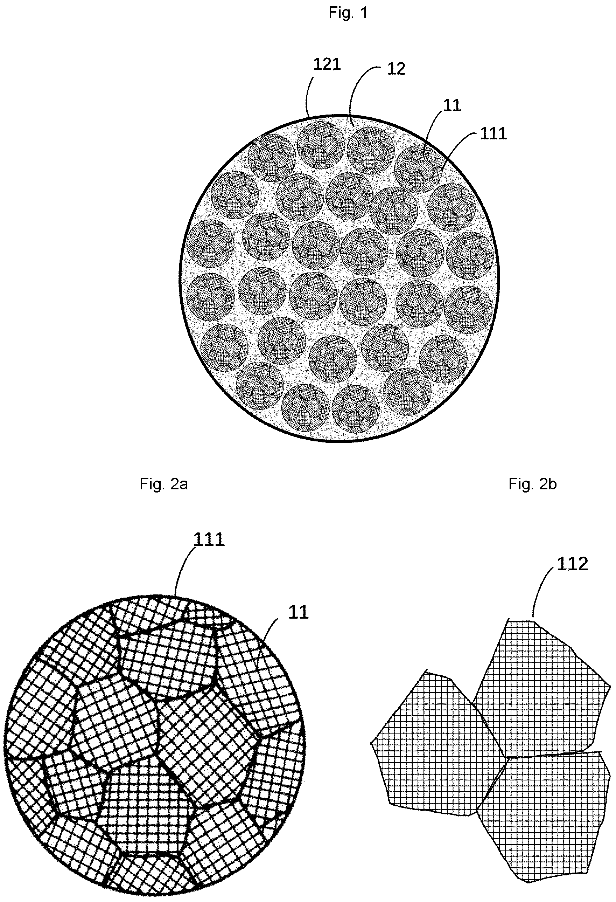

In a first aspect, the present disclosure provides an anode material. As shown in Fig. 1, the anode material includes a secondary particle 12, and the secondary particle 12 includes silicon primary nanoparticles 11.

As shown in Fig. 2a and Fig. 2b, the silicon primary nanoparticles 11 include at least one silicon grain 112, an average particle size of the silicon grains 112 is Ds nm, and an average particle size of the silicon primary nanoparticles 11 is Dn nm; and a crystallinity of the silicon primary nanoparticles 11 is A, the A is equal to Dn/Ds, and the A is equal to or greater than 1 and equal to or less than 200.

In the above solution, by exploring a relationship between the size of the silicon primary nanoparticles 11 and the size of the silicon grains 12, at the same silicon primary nanoparticle size, control of the crystallinity A of the silicon primary nanoparticles 11 can better reduce the problem of stress concentration caused by the silicon primary nanoparticles 11 in a lithium intercalation/deintercalation process, which is conducive to uniform release of stress of the primary nanoparticles, guarantees the structural stability of the silicon primary nanoparticles 11, and reduces particle pulverization. At the same silicon primary nanoparticle size, when the crystallinity A of the silicon primary nanoparticles 11 is too large, it is indicated that the size of the silicon grains 12 is too small. When the size of the silicon grains 12 is too small, grain boundaries between the silicon grains will gradually disappear in a lithiation process, and large-size grains are formed eventually, namely electrochemical sintering is realized. After the electrochemical sintering, the grain boundaries between the silicon grains disappear, and the silicon grains grow. After lithium intercalation of the anode material, the local stress of the silicon primary nanoparticles 11 is increased, and the structural instability of the anode material is increased, leading to decrease of the cycle performance and capacity of the anode material. At present, studies have found that when the size of the silicon grains is less than 10 nm, obvious electrochemical sintering occurs, and the sintering degree can be reduced by controlling a charge current, or the silicon grains or the silicon particles need to be separated by carbon.

In some embodiments, the average particle size of the silicon primary nanoparticles 11 is Dn nm, and the Dn is equal to or greater than 1 and equal to or less than 200, and may be specifically 1 nm, 5 nm, 10 nm, 15 nm, 20 nm, 30 nm, 40 nm, 50 nm, 80 nm, 100 nm, 120 nm, 150 nm, 180 nm, 190 nm, or 200 nm, etc., which is not limited herein.

In some embodiments, the average particle size of the silicon grains 112 is Ds nm, and the Ds is equal to or greater than 1 and equal to or less than 100, and may be specifically 1 nm, 5 nm, 10 nm, 15 nm, 20 nm, 30 nm, 40 nm, 50 nm, 60 nm, 70 nm, 80 nm, 90 nm, or 100 nm, etc., which is not limited herein.

In some embodiments, the crystallinity of the silicon primary nanoparticles 11 is A, the A is equal to Dn/Ds, the A is equal to or greater than 1 and equal to or less than 200, and the A may be specifically in a value range of 1, 5, 10, 15, 20, 30, 40, 50, 80, 100, 120, 150, 180, or 200, etc., and certainly may also be other values in the above range, which is not limited herein.

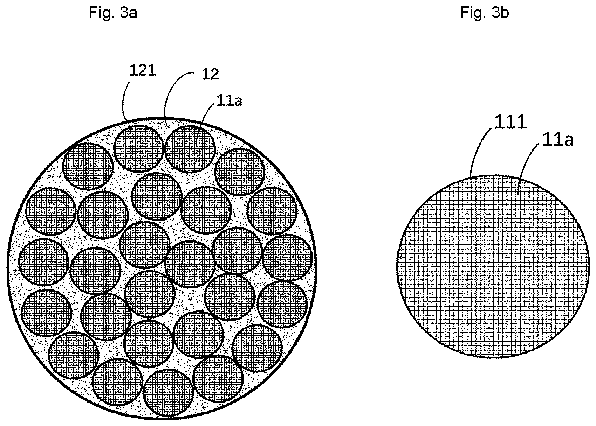

In some embodiments, as shown in Fig. 3a and Fig. 3b, the crystallinity A of the silicon primary nanoparticles 11 is equal to 1, and the silicon primary nanoparticles are monocrystalline silicon. The secondary particle 12 includes a plurality of monocrystalline silicon primary particles 11a.

In some embodiments, the crystallinity (A) of the silicon primary nanoparticles is greater than 1 and equal to or less than 200, the silicon primary nanoparticles include silicon grains, and the silicon grains include polycrystalline silicon.

In some embodiments, as shown in Fig. 1, the anode material includes a secondary particle 12, and the secondary particle 12 includes silicon primary nanoparticles 11; an average particle size of the silicon primary nanoparticles 11 is Dn nm, and an average particle size of the secondary particle 12 is Dm nm; and a bulking density of the secondary particle 12 is B, the B is equal to Dm/Dn, and the B is equal to or greater than 5 and equal to or less than 400.

In the above solution, by exploring a relationship between the size of the secondary particle and the size of the silicon primary nanoparticles, at the same silicon primary particle size, decrease of the value of the bulking density B can decrease the expansion rate of the anode material, because the compressive stress and tensile stress of the secondary particle after lithiation are cumulative stress, and the lower bulking density indicates fewer primary particles and lower cumulative stress. Therefore, the smaller expansion rate of the anode material is conducive to the formation of a stable solid electrolyte membrane on the surface of the anode material, so as to improve the rate performance and cycle stability of the anode material.

In some embodiments, the average particle size of the secondary particle 12 is Dm nm, and the Dm is equal to or greater than 500 and equal to or less than 25,000, and may be specifically 500 nm, 1,000 nm, 1,500 nm, 2,000 nm, 3,000 nm, 5,000 nm, 8,000 nm, 10,000 nm, 15,000 nm, 20,000 nm, 23,000 nm, or 25,000 nm, etc., which is not limited herein.

In some embodiments, the bulking density of the secondary particle 12 is B, the B is equal to Dm/Dn, the B is equal to or greater than 5 and equal to or less than 400, and the B may be specifically in a value range of 5, 10, 20, 50, 80, 100, 150, 200, 300, 350, or 400, etc., and certainly may also be other values in the above range, which is not limited herein. Control of the bulking density of the secondary particle 12 can ensure the structural stability of the secondary particle, which is conducive to forming a stable SEI membrane, reducing the expansion rate of the entire anode material, and improving the initial efficiency and cycle performance of the anode material. When the bulking density of the secondary particle 12 is too large, at the same secondary particle size, the size of the silicon primary nanoparticles 11 is too small, leading to increase of the specific surface area of the secondary particle 12 and increase of the specific surface area of the anode material. In a lithium intercalation/deintercalation process, side reactions are increased, and consumed active lithium ions are increased, leading to decrease of the initial coulombic efficiency of the anode material. When the bulking density of the secondary particle 12 is too small, at the same secondary particle size, the size of the silicon primary nanoparticles is too large, and the expansion stress of the secondary particle 12 is more concentrated, easily leading to disintegration and pulverization of the secondary particle, inconvenience for improving the structural stability of the anode material, and decrease of the cycle stability of a battery prepared from the anode material.

In some embodiments, the anode material further includes conductive layers 111 located on at least partial surfaces of the silicon primary nanoparticles 11, and the conductive layers 111 include at least one of an amorphous carbon material, a graphitized carbon material, and a conductive ceramic material. The conductive layers 111 have porous structures, and the porous structures are conducive to the transport of lithium ions and electrons. In addition, by constructing the conductive layers 111 on the surfaces of the silicon primary nanoparticles, the conductive layers 111 can improve the electrical conductivity of the silicon primary nanoparticles 11, and can also effectively alleviate the volume expansion of the silicon primary nanoparticles 11.

In some embodiments, the conductive layers 111 include a graphitized carbon material, the graphitized carbon material is graphene, a layer number of the graphene is less than 20, and the layer number of graphene may be specifically 1 layer, 2 layers, 3 layers, 5 layers, 8 layers, 10 layers, 12 layers, 15 layers, 18 layers, or 19 layers, etc., and certainly may also be other values in the above range, which is not limited herein.

In some embodiments, a thickness of the conductive layers is 1 nm-200 nm, and may be specifically 1 nm, 10 nm, 20 nm, 40 nm, 50 nm, 80 nm, 100 nm, 150 nm, 180 nm, or 200 nm, etc., which is not limited herein.

In some embodiments, the conductive ceramic material includes at least one of a metal oxide, a transition metal nitride, and a sulfide.

In some embodiments, the metal oxide includes at least one of V₂O₅, TiO₂, Nb₂O₅, CdO, CsO, MoO₃, WO₃, BaO, SnO₂, Cr₂O₃, MnO, Ag₂O, CoO, NiO, Cu₂O, and SnO.

In some embodiments, the transition metal nitride includes at least one of VN, TiN, CoN, Fe₃N, Co₄N, and WN.

In some embodiments, the sulfide includes at least one of CdS, Ag₂S, Sb₂S₃, TiS₂, and Li₂S.

In some embodiments, the anode material further includes a coating layer 121 located on at least a partial surface of the secondary particle 12, and the coating layer 121 includes at least one of an amorphous carbon material, a graphitized carbon material, and a polymer.

It may be understood that by constructing the coating layer on the surface of the secondary particle, the coating layer can further reduce the volume expansion of the anode material. By cooperatively modifying the anode material with the conductive layers and the coating layer and using the electrical conductivity and an alleviating effect of the conductive layers 111 on the volume expansion of the silicon primary nanoparticles, it is ensured that the anode material still has excellent electrical contact performance after lithium intercalation. By combining with the outermost coating layer 121, side reactions between the silicon primary nanoparticles and an electrolyte can be effectively avoided, and meanwhile, the structural stability of the anode material is enhanced.

In some embodiments, the coating layer 121 includes a polymer, and exemplarily, the polymer may be at least one of a diblock copolymer, a triblock copolymer, and a multiblock copolymer.

In some embodiments, a mass content of the polymer in the anode material is 1%-20%, and may be specifically 1%, 3%, 4%, 5%, 6%, 7%, 10%, 12%, 15%, 18%, or 20%, etc., which is not limited herein. A thickness of the coating layer 121 is 5 nm-300 nm, and may be specifically 5 nm, 50 nm, 80 nm, 100 nm, 150 nm, 200 nm, 250 nm, or 300 nm, etc., which is not limited herein.

In some embodiments, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid. The polymer is preferably at least one of polypyrrole, polythiophene, polyaniline, polyaniline, and polyacetylene.

In some embodiments, the coating layer 121 includes a graphitized carbon material, and the thickness of the coating layer is 5 nm-100 nm, and may be specifically 5 nm, 10 nm, 30 nm, 50 nm, 70 nm, 80 nm, 90 nm, or 100 nm, etc., which is not limited herein.

In some embodiments, the coating layer 121 includes an amorphous carbon material, and the thickness of the coating layer is 10 nm-500 nm, and may be specifically 10 nm, 50 nm, 80 nm, 100 nm, 150 nm, 200 nm, 250 nm, 300 nm, 450 nm, or 500 nm, etc., which is not limited herein.

In some embodiments, a mass content of carbon in the anode material is 5%-80%, and may be specifically 5%, 8%, 10%, 15%, 20%, 30%, 35%, 40%, 45%, 50%, 60%, 70%, or 80%, etc., which is not limited herein. It should be noted that the carbon in the anode material is derived from a carbon material.

In some embodiments, a powder tap density of the anode material is 0.3 g/cm³-1.3 g/cm³, and may be specifically 0.3 g/cm³, 0.5 g/cm³, 0.6 g/cm³, 0.7 g/cm³, 0.8 g/cm³, 1.0 g/cm³, 1.3 g/cm³, etc., preferably 0.5-0.8 g/cm³.

In some embodiments, a powder compaction density of the anode material is 1.2 g/cm³-1.8 g/cm³, for example, 1.2 g/cm³, 1.3 g/cm³, 1.4 g/cm³, 1.5 g/cm³, 1.6 g/cm³, or 1.8 g/cm³, etc., preferably 1.45 g/cm³-1.75 g/cm³.

In some embodiments, a median particle size of the anode material is 0.5 µm-25 µm. Optionally, the median particle size of the anode material may be specifically 0.5 µm, 1 µm, 3 µm, 4 µm, 5 µm, 7 µm, 10 µm, 13 µm, 15 µm, 20 µm, or 25 µm, etc., which is not limited herein. The median particle size of the anode material is preferably 0.5 µm-10 µm, more preferably 1 µm-5 µm.

In some embodiments, a specific surface area of the anode material is 1 m²/g-50 m²/g. Optionally, the specific surface area of the anode material may be 1 m²/g, 5 m²/g, 8 m²/g, 10 m²/g, 15 m²/g, 20 m²/g, 25 m²/g, 30 m²/g, 35 m²/g, 40 m²/g, 45 m²/g, or 50m²/g, etc., which is not limited herein. It may be understood that a smaller specific surface area is better, and a too large specific surface area easily leads to the formation of an SEI membrane, consumes too much irreversible lithium salts, and decreases of the initial efficiency of a battery. Comprehensively considering the cost of a preparation process, the specific surface area is controlled at 2 m²/g-15 m²/g.

In some embodiments, a mass content of oxygen in the anode material is less than 15%, and may be specifically 5%, 6%, 8%, 10%, 12%, 13%, 14%, or 15%, etc., which is not limited herein.

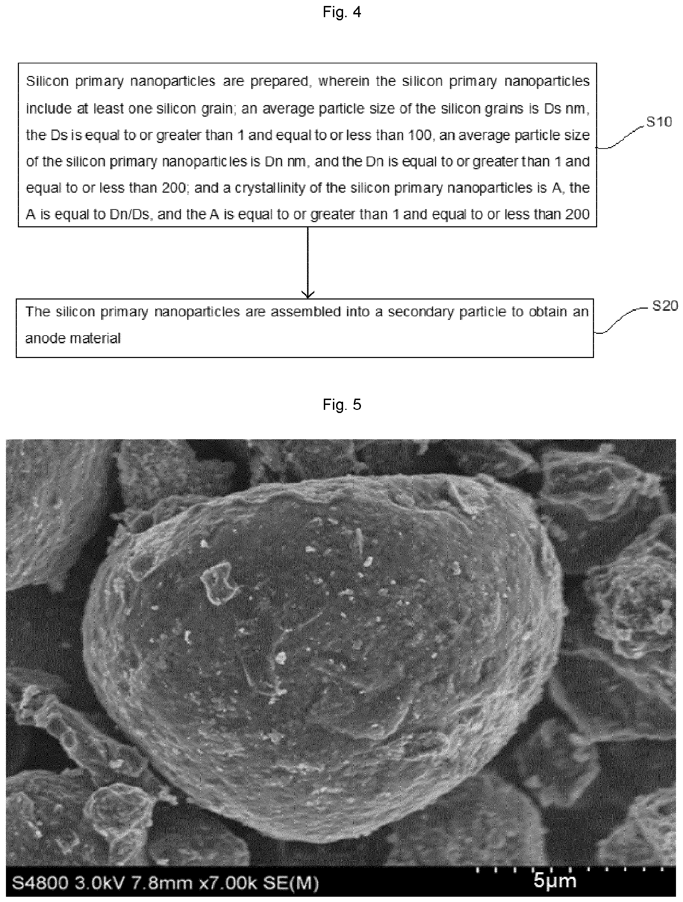

The present disclosure further provides a preparation method for an anode material. As shown in Fig. 4, the method includes the following steps:
S10, preparing silicon primary nanoparticles, wherein the silicon primary nanoparticles include at least one silicon grain; an average particle size of the silicon grains is Ds nm, the Ds is equal to or greater than 1 and equal to or less than 100, an average particle size of the silicon primary nanoparticles is Dn nm, and the Dn is equal to or greater than 1 and equal to or less than 200; and a crystallinity of the silicon primary nanoparticles is A, the A is equal to Dn/Ds, and the A is equal to or greater than 1 and equal to or less than 200; and
S20, assembling the silicon primary nanoparticles into a secondary particle to obtain an anode material.

In the solution, by exploring a relationship between the size of the silicon primary nanoparticles and the size of the silicon grains as well as a balance relationship between the size of the secondary particle and the size of the silicon primary nanoparticles, stress concentration generated by the silicon primary nanoparticles in a lithiation process can be reduced, the structural stability of the silicon primary nanoparticles in a lithiation process is improved, the expansion rate of the anode material is reduced, and convenience is provided for forming a stable solid electrolyte membrane on the surface of the anode material, such that the anode material has low expansion, high cycle stability, high rate performance, and high initial coulombic efficiency.

The preparation method for an anode material provided in the present disclosure not only can improve the electrochemical performance of the material, but also is suitable for large-scale production. The prepared anode material can effectively improve the rate performance and cycle stability of a lithium battery.

The preparation method of the present disclosure is specifically introduced in combination with embodiments below.

In step S10, silicon primary nanoparticles are prepared. The silicon primary nanoparticles include at least one silicon grain; an average particle size of the silicon grains is Ds nm, the Ds is equal to or greater than 1 and equal to or less than 100, an average particle size of the silicon primary nanoparticles is Dn nm, and the Dn is equal to or greater than 1 and equal to or less than 200; and a crystallinity of the silicon primary nanoparticles is A, the A is equal to Dn/Ds, and the A is equal to or greater than 1 and equal to or less than 200.

In some embodiments, the average particle size of the silicon primary nanoparticles is Dn nm, and the Dn is equal to or greater than 1 and equal to or less than 200, and may be specifically 1 nm, 5 nm, 10 nm, 15 nm, 20 nm, 30 nm, 40 nm, 50 nm, 80 nm, 100 nm, 120 nm, 150 nm, 180 nm, 190 nm, or 200 nm, etc., which is not limited herein.

In some embodiments, the average particle size of the silicon grains is Ds nm, and the Ds is equal to or greater than 1 and equal to or less than 100, and may be specifically 1 nm, 5 nm, 10 nm, 15 nm, 20 nm, 30 nm, 40 nm, 50 nm, 60 nm, 70 nm, 80 nm, 90 nm, or 100 nm, etc., which is not limited herein.

In some embodiments, the crystallinity of the silicon primary nanoparticles is A, the A is equal to Dn/Ds, the A is equal to or greater than 1 and equal to or less than 200, and the A may be specifically in a value range of 1, 5, 10, 15, 20, 30, 40, 50, 80, 100, 120, 150, 180, or 200, etc., and certainly may also be other values in the above range, which is not limited herein.

In some embodiments, the step of preparing silicon primary nanoparticles includes performing vapor deposition by using a silicon source gas to obtain the silicon primary nanoparticles.

In some embodiments, the silicon source gas includes at least one of silane, ethylsilane, trichlorosilane, dichlorosilane, or silicon tetrachloride.

In some embodiments, a vacuum pressure before the vapor deposition is less than 1.0 Torr, and may be specifically 0.9 Torr, 0.8 Torr, 0.7 Torr, 0.6 Torr, 0.5 Torr, 0.4 Torr, 0.3 Torr, or 0.1 Torr, etc., which is not limited herein. It may be understood that before chemical vapor deposition, the pressure in a furnace may be vacuumized to a vacuum state, which is conducive to improving the purity of the silicon primary nanoparticles. Then, heating is performed, an appropriate amount of the silicon source gas is introduced to serve as a raw material for growth of the silicon primary nanoparticles, and deposition is performed for a period of time to obtain the silicon primary nanoparticles.

In some embodiments, a heating rate of the vapor deposition is 1 °C/min-20 °C/min, and may be specifically 1 °C/min, 3 °C/min, 5 °C/min, 8 °C/min, 10 °C/min, 15 °C/min, or 20 °C/min, which is not limited herein.

In some embodiments, a temperature of the vapor deposition is 300 °C-1,000 °C, and may be specifically 300 °C, 400 °C, 500 °C, 600 °C, 700 °C, 800 °C, or 1,000 °C, etc., which is not limited herein.

In some embodiments, the temperature of the vapor deposition is 600 °C-1,000 °C, and may be specifically 400 °C, 500 °C, 600°C, 700°C, 800°C, or 1,000 °C.

In some embodiments, a flow quantity of the silicon source gas is 0.05 L/min-10 L/min, and may be specifically 0.05 L/min, 0.1 L/min, 0.5 L/min, 1 L/min, 2 L/min, 3 L/min, 5 L/min, 7 L/min, 8 L/min, or 10 L/min, which is not limited herein.

In some embodiments, a gas introduction time of the silicon source gas (namely a time of the vapor deposition) is 0.1 h-10 h, and may be specifically 0.1 h, 0.5 h, 1 h, 2 h, 4 h, 6 h, 8 h, or 10 h, which is not limited herein.

In some embodiments, a pressure of the vapor deposition is 100 Torr-500 Torr, and may be specifically 100 Torr, 150 Torr, 200 Torr, 250 Torr, 300 Torr, 350 Torr, 400 Torr, 450 Torr, or 500 Torr, etc., which is not limited herein.

In other embodiments, the silicon primary nanoparticles may be prepared by a plasma heating method, and the size ratio (crystallinity A) of the silicon primary nanoparticles to the silicon grains may be controlled within the above range.

Further, before the step S20, the method further includes forming conductive layers on surfaces of the silicon primary nanoparticles, and the conductive layers include at least one of an amorphous carbon material, a graphitized carbon material, and a conductive ceramic material.

In some embodiments, the step of forming conductive layers on surfaces of the silicon primary nanoparticles includes: in a protective atmosphere, depositing a first gas-phase carbon source on the surfaces of the silicon primary nanoparticles by a vapor deposition method to form the conductive layers.

In some embodiments, a concentration of the first gas-phase carbon source is 0.1 L/min-10 L/min, and may be specifically 0.1 L/min, 1 L/min, 3 L/min, 5 L/min, 8 L/min, or 10 L/min, etc., which is not limited herein.

In some embodiments, a heat preservation time of the vapor deposition is 1 h-48 h, and may be specifically 1 h, 2 h, 4 h, 6 h, 8 h, 12 h, 18 h, 24 h, or 48 h, which is not limited herein.

In some embodiments, a temperature of the vapor deposition is 200 °C-1,050 °C, and may be specifically 200 °CC, 300 °C, 400°C, 500°C, 600°C, 700°C, 800°C, 950 °C, or 1,050 °C, which is not limited herein.

In some embodiments, a heating rate of the vapor deposition is 1 °C/min-30 °C/min, and may be specifically 1 °C/min, 3 °C/min, 5 °C/min, 8 °C/min, 10 °C/min, 15 °C/min, 20°C/min, 25 °C/min, or 30 °C/min, which is not limited herein.

In some embodiments, the protective atmosphere includes at least one of helium, neon, argon, krypton, and xenon.

In some embodiments, a volume ratio of the protective atmosphere to the first gas-phase carbon source is 10:(0.5-10), and may be specifically 10:0.5, 10:1, 10:2, 10:3, 10:4, 10:5, 10:7, 10:8, 10:9, or 10:10, which is not limited herein.

In some embodiments, the first gas-phase carbon source includes at least one of acetylene, methane, toluene, cyclohexane, ethanol, ethylene, and propylene.

In some embodiments, the step of forming conductive layers on surfaces of the silicon primary nanoparticles includes: introducing a conductive material at a preset pulse frequency, and performing atomic layer deposition on the surfaces of the silicon primary nanoparticles to form the conductive layers. It may be understood that the conductive layers deposited on the surfaces of the silicon primary nanoparticles by an atomic layer deposition technology are conducive to improving the electrical conductivity of the silicon primary nanoparticles, and then improving the electrical conductivity and rate performance of the anode material.

Specifically, the silicon primary nanoparticles may be placed in an atomic layer deposition chamber, replacement with an inert gas is performed after vacuumizing, then heating is performed, one or more conductive materials are introduced at a certain pulse frequency for a certain period of time to serve as raw materials of the conductive layers, and one or more conductive layers are deposited on the surfaces of the silicon primary nanoparticles by controlling the amount of the conductive materials.

In some embodiments, a temperature of the atomic layer deposition is 200 °C-750 °C, may be specifically 200 °C, 300 °C, 400°C, 450 °C, 500°C, 550 °C, 600°C, or 750 °C, etc., and certainly may also be other values in the above range, which is not limited herein.

In some embodiments, a time of the atomic layer deposition is 1 h-48 h, and may be specifically 1 h, 2 h, 4 h, 6 h, 8 h, 12 h, 18 h, 24 h, or 48 h, which is not limited herein.

In some embodiments, the pulse frequency is 40 khz-500 khz, and may be specifically 40 khz, 60 khz, 80 khz, 100 khz, 150 khz, 200 khz, 250 khz, 300 khz, 400 khz, or 500 khz, etc., which is not limited herein.

In some embodiments, a pulse duration of the conductive material is 10 ms-800 ms, and may be specifically 10 ms, 50 ms, 100 ms, 200 ms, 300 ms, 400 ms, 500 ms, 600 ms, 700 ms, or 800 ms, etc., which is not limited herein.

By controlling various parameters of the atomic layer deposition, convenience is provided for forming the silicon primary nanoparticles with the ratio of the size of the silicon primary nanoparticles to the size of the silicon grains within an appropriate range, and convenience is provided for alleviating the problem of stress concentration of the silicon primary nanoparticles.

In some embodiments, the conductive layers include a conductive ceramic material, and the conductive ceramic material includes at least one of a metal oxide, a transition metal nitride, or a sulfide.

In some embodiments, the conductive material includes an oxygen-containing organic compound of a transition metal, and the oxygen-containing organic compound of a transition metal includes at least one of titanium methoxide, vanadium acetate, tetrabutyl titanate, and niobium oxalate. An metal oxide may be formed on the surfaces of the silicon primary nanoparticles by an atomic layer deposition process, and the metal oxide includes at least one of V₂O₅, TiO₂, Nb₂O₅, CdO, CsO, MoO₃, WO₃, BaO, SnO₂, Cr₂O₃, MnO, Ag₂O, CoO, NiO, Cu₂O, and SnO.

In some embodiments, the conductive material includes a nitrogen-containing organic compound of a transition metal, and the nitrogen-containing organic compound of a transition metal includes at least one of ammonium metavanadate, ammonium titanate, ammonium cobaltate, ammonium trioxalatoferrate, tetrabutyl titanate, and ammonium tungstate. A transition metal nitride may be formed on the surfaces of the silicon primary nanoparticles by an atomic layer deposition process, and the transition metal nitride includes at least one of VN, TiN, CoN, Fe₃N, Co₄N, and WN.

In some embodiments, the conductive material includes an organic compound of a transition metal and a sulfur-containing gas, and the sulfur-containing gas includes at least one of gaseous sulfur vapor, hydrogen sulfide, and sulfur dioxide. A sulfide may be formed on the surfaces of the silicon primary nanoparticles by an atomic layer deposition process, and the sulfide includes at least one of CdS, Ag₂S, Sb₂S₃, TiS₂, and Li₂S.

In step S20, the silicon primary nanoparticles are assembled into a secondary particle to obtain an anode material.

It should be noted that the silicon primary nanoparticles may be assembled to form the secondary particle by self-assembly, melting assembly, electrostatic adsorption, or spray granulation coating and other methods, which is not limited herein.

In some embodiments, the step of assembling the silicon primary nanoparticles into a secondary particle includes: mixing a first solution containing the silicon primary nanoparticles and an anionic surfactant with a second solution containing the silicon primary nanoparticles and a cationic surfactant, and performing solid-liquid separation to obtain the secondary particle.

In some embodiments, the anionic surfactant includes at least one of cetyltrimethylammonium bromide, sodium hexadecyl sulfate, polyvinylpyrrolidone, and sodium polystyrenesulfonate.

In some embodiments, the cationic surfactant includes at least one of polydiallyldimethylammonium chloride, aminopropyl triethoxysilane, and a silane coupling agent.

In some embodiments, a mass ratio of the anionic surfactant to the silicon primary nanoparticles is (0.05-5):1, and may be specifically 0.05:1, 0.08:1, 1:1, 1.5:1, 2:1, 3:1, 4:1, or 5:1, etc., which is not limited herein.

In some embodiments, a mass ratio of the cationic surfactant to the silicon primary nanoparticles is (0.05-10):1, and may be specifically 0.05:1, 0.08:1, 1:1, 1.5:1, 2:1, 3:1, 4:1, 5:1, 8:1, 9:1, or 10:1, etc., which is not limited herein.

In some embodiments, the first solution and/or the second solution include a solvent, and the solvent may be a polar solvent. Specifically, the solvent includes at least one of water, anhydrous ethanol, methanol, and isopropanol.

In some embodiments, a mass ratio of the silicon primary nanoparticles in the first solution to the silicon primary nanoparticles in the second solution is 1:(0.5-1.5), and may be specifically 1:0.5, 1:0.8, 1:0.9, 1:1, 1:1.2, 1:1.3, or 1:1.5, which is not limited herein.

In some embodiments, a solid content of the first solution is 2%-50%, and may be specifically 2%, 5%, 8%, 10%, 15%, 18%, 20%, 25%, 30%, 40%, 45%, 49%, or 50%, etc., which is not limited herein.

In some embodiments, a solid content of the second solution is 0.5%-25%, and may be specifically 0.5%, 0.8%, 1%, 5%, 8%, 9%, 10%, 12%, 13%, 15%, 18%, 20%, 24%, or 25%, etc., which is not limited herein.

In some embodiments, a solid content of a mixed slurry is 5-60%, and may be specifically 5%, 8%, 10%, 15%, 18%, 20%, 25%, 30%, 40%, 45%, 50%, 54%, 59%, or 60%, etc., which is not limited herein.

In some embodiments, the step of assembling the silicon primary nanoparticles into a secondary particle includes: subjecting a mixed slurry containing the silicon primary nanoparticles, an anionic surfactant or a cationic surfactant to spray granulation to obtain the secondary particle.

It should be noted that the types and contents of the cationic surfactant and the anionic surfactant are described as above, which are not repeated herein.

In some embodiments, the step of assembling the silicon primary nanoparticles into a secondary particle further includes: subjecting the mixed slurry to dispersion and centrifugation treatment, and a dispersion method includes at least one of mechanical stirring and ultrasonic dispersion.

In some embodiments, the mixed slurry further includes a solvent, and the solvent is selected from at least one of water, anhydrous ethanol, methanol, and isopropanol.

In some embodiments, a drying temperature of the spray granulation is 100 °C-200 °C, and may be specifically 100 °C, 120 °C, 130 °C, 140 °C, 150 °C, 160 °C, 180 °C, or 200 °C, which is not limited herein.

In some embodiments, a feed rate of the spray granulation is 100 mL/min-1,000 mL/min, and may be specifically 100 mL/min, 200 mL/min, 300 mL/min, 400 mL/min, 600 mL/min, 800 mL/min, or 1,000 mL/min, etc., which is not limited herein.

In some embodiments, the secondary particle includes silicon primary nanoparticles; an average particle size of the silicon primary nanoparticles is Dn nm, and an average particle size of the secondary particle is Dm nm; and a bulking density of the secondary particle is B, the B is equal to Dm/Dn, and the B is equal to or greater than 5 and equal to or less than 400.

In the above solution, by exploring a relationship between the size of the secondary particle and the size of the silicon primary nanoparticles, at the same silicon primary particle size, decrease of the value of the bulking density B can decrease the expansion rate of the anode material, because the compressive stress and tensile stress of the secondary particle after lithiation are cumulative stress, and the lower bulking density indicates fewer primary particles and lower cumulative stress. Therefore, the smaller expansion rate of the anode material is conducive to the formation of a stable solid electrolyte membrane on the surface of the anode material, so as to improve the rate performance and initial coulombic efficiency of the anode material.

In some embodiments, the average particle size of the secondary particle is Dm nm, and the Dm is equal to or greater than 500 and equal to or less than 25,000, and may be specifically 500 nm, 1,000 nm, 1,500 nm, 2,000 nm, 3,000 nm, 5,000 nm, 8,000 nm, 10,000 nm, 15,000 nm, 20,000 nm, 23,000 nm, or 25,000 nm, etc., which is not limited herein.

In some embodiments, the bulking density of the secondary particle is B, the B is equal to Dm/Dn, the B is equal to or greater than 5 and equal to or less than 400, and the B may be specifically in a value range of 5, 10, 20, 50, 80, 100, 150, 200, 300, 350, or 400, etc., and certainly may also be other values in the above range, which is not limited herein. Control of the bulking density of the secondary particle can ensure the structural stability of the secondary particle, which is conducive to forming a stable SEI membrane, reducing the expansion rate of the anode material, and improving the initial efficiency and cycle performance of the anode material. When the bulking density of the secondary particle is too large, at the same secondary particle size, the size of the silicon primary nanoparticles is too small, leading to increase of the specific surface area of the secondary particle and increase of the specific surface area of the anode material. In a lithium intercalation/deintercalation process, side reactions are increased, and consumed active lithium ions are increased, leading to decrease of the initial coulombic efficiency of the anode material. When the bulking density of the secondary particle is too small, at the same secondary particle size, the size of the silicon primary nanoparticles is too large, and the expansion stress of the secondary particle is more concentrated, easily leading to disintegration and pulverization of the secondary particle, inconvenience for improving the structural stability of the anode material, and decrease of the cycle stability of a battery prepared from the anode material.

After the step S20, the method further includes: forming a coating layer on a surface of the secondary particle, and the coating layer includes at least one of an amorphous carbon material, a graphitized carbon material, and a polymer.

In some embodiments, the step of forming a coating layer on a surface of the secondary particle includes: subjecting a mixed coating solution containing the secondary particle and a polymer to spray drying to form the coating layer on the surface of the secondary particle, and the coating layer includes the polymer.

In some embodiments, a solid content of the secondary particle in the mixed coating solution is 5%-50%, and may be specifically 5% 10%, 15%, 20%, 25%, 30%, 35%, 40%, 45%, or 50%, etc., which is not limited herein.

In some embodiments, the mixed coating solution includes a polar solvent.

In some embodiments, the polar solvent includes at least one of water, anhydrous ethanol, methanol, and isopropanol.

In some embodiments, a mass ratio of the secondary particle to the polymer is 10:(0.1-5), and may be specifically 10:0.1, 10:1, 10:2, 10:3, 10:4, or 10:5, which is not limited herein.

In some embodiments, a drying temperature of the spray drying is 60 °C-200 °C, and may be specifically 60 °C, 80 °C, 100 °C, 120 °C, 150 °C, 180 °C, or 200 °C.

In some embodiments, the polymer includes at least one of a diblock copolymer, a triblock copolymer, and a multiblock copolymer.

In some embodiments, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid.

In some embodiments, the step of forming a coating layer on a surface of the secondary particle includes: introducing a second gas-phase carbon source into the secondary particle, and performing heating until the second gas-phase carbon source undergoes a thermal cracking reaction to deposit the coating layer on the surface of the secondary particle, and the coating layer includes at least one of an amorphous carbon material and a graphitized carbon material.

In some embodiments, the second gas-phase carbon source includes at least one of acetylene, methane, toluene, cyclohexane, ethanol, ethylene, and propylene.

In some embodiments, a heating rate of the thermal cracking reaction is 1 °C/min-20 °C/min, and may be, for embodiment, 1 °C/min, 3 °C/min, 5 °C/min, 8 °C/min, 10 °C/min, 15 °C/min, or 20 °C/min, which is not limited herein.

In some embodiments, a temperature of the thermal cracking reaction is 600 °C-1,000 °C, and specifically, the reaction temperature may be 600°C, 650 °C, 700°C, 750 °C, 800°C, 890 °C, 900 °C, 960 °C, or 1,000 °C. The applicant has found through many tests that by controlling the reaction temperature within 600 °C-1,000 °C, the reaction efficiency can be improved, a uniform carbon layer is formed on the surface of the secondary particle, and the carbon layer may be amorphous carbon. Preferably, the reaction temperature is 700 °C-900 °C.

In some embodiments, a heat preservation time of the thermal cracking reaction is 1 h-48 h, and may be specifically 1 h, 4 h, 8 h, 12 h, 16 h, 24 h, 28 h, 32 h, 38 h, or 48 h, which is not limited herein.

In some embodiments, a concentration of the second gas-phase carbon source is 0.1 L/min-10 L/min, and may be specifically 0.1 L/min, 0.4 L/min, 0.6 L/min, 0.8 L/min, 1.0 L/min, 2 L/min, 5 L/min, 6 L/min, 8 L/min, 9 L/min, or 10 L/min, etc., which is not limited herein.

In some embodiments, the thermal cracking reaction is carried out in a protective atmosphere.

In some embodiments, the protective atmosphere includes at least one of helium, neon, argon, krypton, and xenon.

An embodiment of the present disclosure further provides a battery, which uses the anode material provided in the above embodiments of the present disclosure or an anode material prepared by the preparation method provided in the above embodiments of the present disclosure. The battery provided in the embodiment of the present disclosure has the advantages of high capacity, high initial efficiency, long cycle life, excellent rate performance, and low expansion. The battery may be a lithium-ion battery, a sodium-ion battery, a solid electrolyte battery, etc., which is not limited herein.

The embodiments of the present disclosure are further descried below through several examples. The embodiments of the present disclosure are not limited to the following specific embodiments. Appropriate changes may be made for implementation without deviating from the scope of principal rights.

### Embodiment 1

(1) After a chemical vapor deposition furnace was vacuumized to 0.5 Torr and heated to 600 °C at a heating rate of 3 °C/min, a silane gas was introduced at 0.5 L/min, a vapor deposition pressure of the entire deposition furnace was controlled at 300 Torr, a deposition duration was 2 h, and silicon primary nanoparticles were collected after cooling.
(2) The silicon primary nanoparticles were placed in a rotary atmosphere furnace and heated to 950 °C at a heating rate of 3 °C/min under the protection of an argon atmosphere, an acetylene gas was introduced at 0.5 L/min to reach a volume ratio of the argon to the acetylene in the rotary atmosphere furnace at 9:1, and after heat preservation was performed for 4 h, cooling was performed to obtain a precursor, wherein the precursor included the silicon primary nanoparticles and carbon layers located on surfaces thereof.
(3) 10 g of the precursor and cetyltrimethylammonium bromide were dispersed in 200 mL of deionized water at a mass ratio of 10:2, stirred for 30 min, and subjected to ultrasonic treatment for 10 min, followed by centrifugal drying to obtain a modified precursor A1. 10 g of the precursor and 1 g of polydiallyldimethylammonium chloride were dissolved in 100 mL of deionized water, stirred for 30 min, and subjected to ultrasonic treatment for 20 min, followed by centrifugal drying to obtain a modified precursor B2. 10 g of the modified precursor A1 was dissolved in 100 mL of deionized water and stirred for 10 min to obtain a solution E, and 10 g of the modified precursor B2 was dispersed in 100 mL of deionized water and stirred for 10 min to obtain a solution F. The solution E was slowly dropped into the solution F and continuously and rapidly stirred for 40 min, followed by centrifugal drying to obtain a complex.
(4) 10 g of the complex was dissolved in 100 g of anhydrous ethanol and mechanically stirred for 30 min after 1 g of polyacrylic acid was added, and a drying temperature was controlled at 100 °C by a spray drying method to make a surface of a composite material coated with a polymer so as to obtain an anode material.

The anode material prepared in the present embodiment included a secondary particle and a coating layer located on at least a partial surface of the secondary particle, and the coating layer was a polymer layer. The secondary particle included silicon primary nanoparticles and conductive layers located on at least partial surfaces of the silicon primary nanoparticles, the conductive layers were amorphous carbon layers, and the silicon primary nanoparticles included a plurality of silicon grains.

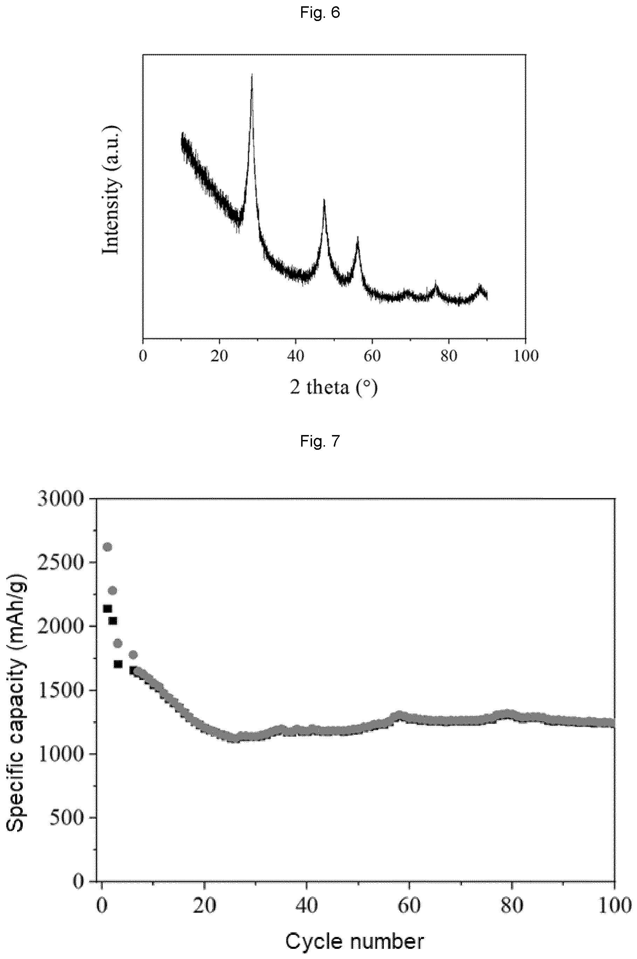

Fig. 5 was a scanning electron microscope image of the anode material prepared in Embodiment 1; Fig. 6 was an XRD pattern of the anode material prepared in Embodiment 1; and Fig. 7 shown a cycle performance curve of the anode material prepared in Embodiment 1, wherein a charge and discharge current was 1,000 mA/g.

As could be seen from the scanning electron microscope image in Fig. 5, the prepared anode material had a spherical structure on the surface and a dense coating layer coated on the surface.

As could be seen from the XRD pattern in Fig. 6, three strong peaks at 28.4°, 47.3°, and 56.1° corresponded to three strong peaks of silicon (JCPDS No. 27-1402), impure phases were basically not found, and the size of silicon grains was calculated as 5 nm according to a Scherer formula.

As could be seen in Fig. 7, the material had excellent cycle performance, a capacity of 1,255 mAh/g after 100 cycles at a current of 0.25 C, and a capacity retention rate of 75%.

Parameters of the anode material in the present embodiment were shown in Table 1 for detail.

### Embodiment 2

(1) After a chemical vapor deposition furnace was vacuumized to 0.5 Torr and heated to 700 °C at a heating rate of 3 °C/min, a silane gas was introduced at 1.5 L/min, a pressure of the entire deposition furnace was controlled at 200 Torr, a deposition duration was 2 h, and silicon primary nanoparticles were collected after cooling.
(2) The silicon primary nanoparticles were placed in a rotary atmosphere furnace and heated to 950 °C at a heating rate of 3 °C/min under the protection of an argon atmosphere, an acetylene gas was introduced at 1.5 L/min to reach a volume ratio of the argon to the acetylene in the rotary atmosphere furnace at 9:1, and after heat preservation was performed for 3 h, cooling was performed to obtain a precursor, wherein the precursor included the silicon primary nanoparticles and carbon layers located on surfaces thereof.
(3) 10 g of the precursor was dissolved in 200 mL of anhydrous ethanol and stirred for 30 min after 2 g of polyvinylpyrrolidone was added, followed by ultrasonic treatment for 10 min to obtain a mixed slurry, and the mixed slurry was spherized by a spray granulation method under drying conditions at 130 °C to obtain a complex H.
(4) 100 g of the complex was placed in a rotary atmosphere furnace and heated to 900 °C at a heating rate of 3 °C/min under the protection of an argon atmosphere, a methane gas was introduced at 0.5 L/min to reach a volume ratio of the argon to the acetylene in the rotary atmosphere furnace at 9:1, then after heat preservation was performed for 6 h, the acetylene gas was closed, and cooling was performed to obtain an anode material.

The anode material prepared in the present embodiment included a secondary particle and a coating layer located on at least a partial surface of the secondary particle, and the coating layer was an amorphous carbon layer. The secondary particle included silicon primary nanoparticles and conductive layers located on at least partial surfaces of the silicon primary nanoparticles, the conductive layers were amorphous carbon layers, and the silicon primary nanoparticles included a plurality of silicon grains.

Parameters of the anode material in the present embodiment were shown in Table 1 for detail.

### Embodiment 3

(1) After a chemical vapor deposition furnace was vacuumized to 0.5 Torr and heated to 600 °C at a heating rate of 3 °C/min, a silane gas was introduced at 0.5 L/min, a pressure of the entire deposition furnace was controlled at 300 Torr, a duration was 2 h, and silicon primary nanoparticles were collected after cooling.
(2) 100 g of the silicon primary nanoparticles were placed in a treatment chamber of an atomic layer deposition device, vacuumized to 0.5 mbar, and heated to a temperature of 250 °C, and then reactive gaseous titanium methoxide as a conductive material was introduced into the treatment chamber by a pulser at a frequency of 500 Hz, wherein a pulse time was 200 ms, and a flow quantity of the gaseous titanium methoxide was 200 sccm. Finally, the gaseous titanium methoxide was closed, a residual reaction gas in the chamber was replaced with argon, and cooling was performed to obtain a precursor, wherein the precursor included the silicon primary nanoparticles and titanium oxide layers located on surfaces thereof.
(3) 10 g of the precursor was dissolved in 300 mL of anhydrous ethanol and stirred for 30 min after 2 g of polyvinylpyrrolidone was added, followed by ultrasonic treatment for 10 min to obtain a mixed slurry, and the mixed slurry was spherized by a spray granulation method (at a feed rate of 500 mL/min) under drying conditions at 150 °C to obtain a complex.
(4) 100 g of the complex was placed in a rotary atmosphere furnace and heated to 950 °C at a heating rate of 5 °C/min under the protection of an argon atmosphere, an acetylene gas was introduced at 2.5 L/min to reach a volume ratio of the argon to the acetylene in the rotary atmosphere furnace at 8:2, then after heat preservation was performed for 6 h, the acetylene gas was closed, and cooling was performed to obtain an anode material.

The anode material prepared in the present embodiment includes a secondary particle and a coating layer located on at least a partial surface of the secondary particle, and the coating layer was an amorphous carbon layer. The secondary particle included silicon primary nanoparticles and conductive layers located on at least partial surfaces of the silicon primary nanoparticles, the conductive layers were titanium oxide layers, and the silicon primary nanoparticles included a plurality of silicon grains.

Parameters of the anode material in the present embodiment were shown in Table 1 for detail.

### Embodiment 4

(1) After a silicon substrate coated with a metallic copper thin layer was placed in a chamber of a chemical vapor deposition furnace and the chemical vapor deposition furnace was vacuumized to 0.5 Torr and heated to 1,000 °C at a heating rate of 20°C/min, a silane gas was introduced at 0.5 L/min, a pressure of the entire deposition furnace was controlled at 100 Torr, a duration was 2 h, and silicon primary nanoparticles were collected after cooling.
(2) 100 g of the silicon primary nanoparticles were placed in a treatment chamber of an atomic layer deposition device, vacuumized to 0.5 mbar, and heated to a temperature of 250 °C, and then gaseous titanium methoxide as a conductive material was introduced into the treatment chamber by a pulser at a frequency of 500 Hz, wherein a pulse time was 200 ms, and a flow quantity of the gaseous titanium methoxide was 200 sccm. Finally, the gaseous titanium methoxide was closed, a residual reaction gas in the chamber was replaced with argon, and cooling was performed to obtain a precursor, wherein the precursor included the silicon primary nanoparticles and titanium oxide layers located on surfaces thereof.
(3) 10 g of the precursor was dissolved in 300 mL of anhydrous ethanol and stirred for 30 min after 2 g of polyvinylpyrrolidone was added, followed by ultrasonic treatment for 10 min to obtain a mixed slurry, and the mixed slurry was spherized by a spray granulation method (at a feed rate of 300 mL/min) under drying conditions at 150 °C to obtain a complex.
(4) 100 g of the complex was placed in a rotary atmosphere furnace and heated to 950 °C at a heating rate of 5 °C/min under the protection of an argon atmosphere, an acetylene gas was introduced at 2.5 L/min to reach a volume ratio of the argon to the acetylene in the rotary atmosphere furnace at 8:2, then after heat preservation was performed for 6 h, the acetylene gas was closed, and cooling was performed to obtain an anode material.

The anode material prepared in the present embodiment includes a secondary particle and a coating layer located on at least a partial surface of the secondary particle, and the coating layer is an amorphous carbon layer. The secondary particle includes silicon primary nanoparticles and conductive layers located on at least partial surfaces of the silicon primary nanoparticles, the conductive layers are titanium oxide layers, and the silicon primary nanoparticles are monocrystalline silicon particles.

Parameters of the anode material in the present embodiment were shown in Table 1 for detail.

### Embodiment 5

(1) After a silicon substrate coated with a metallic copper thin layer was placed in a chamber of a chemical vapor deposition furnace and the chemical vapor deposition furnace was vacuumized to 0.5 Torr and heated to 1,000 °C at a heating rate of 20°C/min, a silane gas was introduced at 0.5 L/min, a pressure of the entire deposition furnace was controlled at 100 Torr, a duration was 2 h, and silicon primary nanoparticles were collected after cooling.
(2) 100 g of the silicon primary nanoparticles were placed in a rotary atmosphere furnace and heated to 1,050 °C at a heating rate of 3 °C/min under the protection of an argon atmosphere, a methane gas was introduced at 0.5 L/min to reach a volume ratio of the argon to the acetylene in the rotary atmosphere furnace at 9:1, and after heat preservation was performed for 3 h, cooling was performed to obtain a precursor, wherein the precursor included the silicon primary nanoparticles and graphitized carbon layers located on surfaces thereof.
(3) 10 g of the precursor was dissolved in 300 mL of anhydrous ethanol and stirred for 30 min after 2 g of polyvinylpyrrolidone was added, followed by ultrasonic treatment for 10 min to obtain a mixed slurry, and the mixed slurry was spherized by a spray granulation method (at a feed rate of 800 mL/min) under drying conditions at 150 °C to obtain a complex.
(4) 100 g of the complex was placed in a rotary atmosphere furnace and heated to 950 °C at a heating rate of 5 °C/min under the protection of an argon atmosphere, an acetylene gas was introduced at 2.5 L/min to reach a volume ratio of the argon to the acetylene in the rotary atmosphere furnace at 8:2, then after heat preservation was performed for 6 h, the acetylene gas was closed, and cooling was performed to obtain an anode material.

The anode material prepared in the present embodiment included a secondary particle and a coating layer located on at least a partial surface of the secondary particle, and the coating layer was an amorphous carbon layer. The secondary particle included silicon primary nanoparticles and conductive layers located on at least partial surfaces of the silicon primary nanoparticles, the conductive layers were graphitized carbon layers, and the silicon primary nanoparticles were monocrystalline silicon particles.

Parameters of the anode material in the present embodiment were shown in Table 1 for detail.

### Embodiment 6

Differences from Embodiment 3 were as follows.

(2) 100 g of silicon primary nanoparticles were placed in a treatment chamber of an atomic layer deposition device, vacuumized to 0.5 mbar, and heated to a temperature of 250 °C, and then ammonium metavanadate as a conductive material was introduced into the treatment chamber by a pulser at a frequency of 500 KHz, wherein a pulse time was 200 ms, and a flow quantity of the ammonium metavanadate was 200 sccm. Finally, the ammonium metavanadate was closed, a residual reaction gas in the chamber was replaced with argon, and cooling was performed to obtain a precursor, wherein the precursor included the silicon primary nanoparticles and vanadium nitride (VN) layers located on surfaces thereof.

Parameters of an anode material in the present embodiment were shown in Table 1 for detail.

### Embodiment 7

Differences from Embodiment 3 were as follows.

(2) 100 g of silicon primary nanoparticles were placed in a treatment chamber of an atomic layer deposition device, vacuumized to 0.5 mbar, and heated to a temperature of 250 °C, and then gaseous titanium methoxide and gaseous sulfur vapor as conductive materials were introduced into the treatment chamber by a pulser at a frequency of 500 Hz, wherein a pulse time was 220 ms, a flow quantity of the gaseous titanium methoxide was 200 sccm, and a flow quantity of the gaseous sulfur vapor was 100 sccm. Finally, the gaseous titanium methoxide and the gaseous sulfur vapor were closed, a residual reaction gas in the chamber was replaced with argon, and cooling was performed to obtain a precursor, wherein the precursor included the silicon primary nanoparticles and Li₂S layers located on surfaces thereof.

Parameters of an anode material in the present embodiment were shown in Table 1 for detail.

### Embodiment 8

Differences from Embodiment 3 were as follows.

(2) Silicon primary nanoparticles were placed in a rotary atmosphere furnace and heated to 1,050 °C at a heating rate of 3 °C/min under the protection of an argon atmosphere, a methane gas was introduced at 0.1 L/min to reach a volume ratio of the argon to the methane in the rotary atmosphere furnace at 9:1, and after heat preservation was performed for 2 h, cooling was performed to obtain a precursor, wherein the precursor included the silicon primary nanoparticles and graphene carbon layers located on surfaces thereof, and a layer number of graphene was 5 layers.

Parameters of an anode material in the present embodiment were shown in Table 1 for detail.

### Embodiment 9

Differences from Embodiment 3 were as follows.

(4) 100 g of a complex was placed in a rotary atmosphere furnace and heated to 1,050 °C at a heating rate of 10 °C/min under the protection of an argon atmosphere, an acetylene gas was introduced at 2.5 L/min to reach a volume ratio of the argon to the acetylene in the rotary atmosphere furnace at 8:2, then after heat preservation was performed for 6 h, the acetylene gas was closed, and cooling was performed to obtain an anode material. A coating layer included graphitized carbon and amorphous carbon.

Parameters of the anode material in the present embodiment were shown in Table 1 for detail.

### Embodiment 10

(1) After a chemical vapor deposition furnace was vacuumized to 0.5 Torr and heated to 600 °C at a heating rate of 3 °C/min, a silane gas was introduced at 0.5 L/min, a vapor deposition pressure of the entire deposition furnace was controlled at 300 Torr, a deposition duration was 2 h, and silicon primary nanoparticles were collected after cooling.
(2) 10 g of the silicon primary nanoparticles and cetyltrimethylammonium bromide were dispersed in 200 mL of deionized water at a mass ratio of 10:2, stirred for 30 min, and subjected to ultrasonic treatment for 10 min, followed by centrifugal drying to obtain modified silicon primary nanoparticles A1. 10 g of the silicon primary nanoparticles and 1 g of polydiallyldimethylammonium chloride were dissolved in 100 mL of deionized water, stirred for 30 min, and subjected to ultrasonic treatment for 20 min, followed by centrifugal drying to obtain modified silicon primary nanoparticles B2. 10 g of the modified silicon primary nanoparticles A1 were dissolved in 100 mL of deionized water and stirred for 10 min to obtain a solution E, and 10 g of the modified silicon primary nanoparticles B2 were dispersed in 100 mL of deionized water and stirred for 10 min to obtain a solution F. The solution E was slowly dropped into the solution F and continuously and rapidly stirred for 40 min, followed by centrifugal drying to obtain a secondary particle, namely an anode material.

The anode material prepared in the present embodiment included a secondary particle, the secondary particle includes silicon primary nanoparticles, and the silicon primary nanoparticles included a plurality of silicon grains.

Parameters of the anode material in the present embodiment were shown in Table 1 for detail.

### Embodiment 11

Differences from Embodiment 3 were as follows.
(1) After a chemical vapor deposition furnace was vacuumized to 0.5 Torr and heated to 500 °C at a heating rate of 3 °C/min, a silane gas was introduced at 0.5 L/min, a pressure of the entire deposition furnace was controlled at 500 Torr, a duration was 2 h, and silicon primary nanoparticles were collected after cooling.

An anode material prepared in the present embodiment includes a secondary particle and a coating layer located on at least a partial surface of the secondary particle, and the coating layer was an amorphous carbon layer. The secondary particle included silicon primary nanoparticles and conductive layers located on at least partial surfaces of the silicon primary nanoparticles, the conductive layers were titanium oxide layers, and the silicon primary nanoparticles included a plurality of silicon grains.

Parameters of the anode material in the present embodiment were shown in Table 1 for detail.

### Embodiment 12

Differences from Embodiment 3 were as follows.
(1) After a chemical vapor deposition furnace was vacuumized to 0.5 Torr and heated to 500 °C at a heating rate of 3 °C/min, a silane gas was introduced at 3.5 L/min, a pressure of the entire deposition furnace was controlled at 100 Torr, a duration was 5 h, and silicon primary nanoparticles were collected after cooling.

An anode material prepared in the present embodiment included a secondary particle and a coating layer located on at least a partial surface of the secondary particle, and the coating layer was an amorphous carbon layer. The secondary particle included silicon primary nanoparticles and conductive layers located on at least partial surfaces of the silicon primary nanoparticles, the conductive layers were titanium oxide layers, and the silicon primary nanoparticles included a plurality of silicon grains.

Parameters of the anode material in the present embodiment were shown in Table 1 for detail.

### Embodiment 13

(1) 100 g of silicon dioxide with an average particle size of 8 um and 100 g of a magnesium powder were evenly mixed, placed in an atmosphere furnace full of a protective atmosphere using a magnesiothermic reduction process of silicon dioxide, heated to 650 °C at a heating rate of 3 °C/min, subjected to heat preservation for 3 h, and then cooled to room temperature to obtain a micro-silicon secondary particle composed of nano-silicon.
(2) A reaction product was dissolved in a 1 mol/L diluted hydrochloric acid solution and stirred for 3 h, followed by suction filtration and drying to obtain a micro-silicon secondary particle.
(3) After acid pickling, 100 g of the micro-silicon secondary particle was placed in a rotary atmosphere furnace and heated to 950 °C at a heating rate of 5 °C/min under the protection of an argon atmosphere, an acetylene gas was introduced at 2.5 L/min to reach a volume ratio of the argon to the acetylene in the rotary atmosphere furnace at 8:2, then after heat preservation was performed for 6 h, the acetylene gas was closed, and cooling was performed to obtain an anode material.

The anode material prepared in the present embodiment included a secondary particle and a coating layer located on at least a partial surface of the secondary particle, and the coating layer was an amorphous carbon layer. The secondary particle included silicon primary nanoparticles.

Parameters of the anode material in the present embodiment were shown in Table 1 for detail.

### Performance tests

(1) Test method for the specific surface area of an anode material:
   A device used was a TriStar3000&3020 full-automatic specific surface area and aperture analyzer of Micromeritics of the United States. According to implementation of the national standard GB/T 19587-2017, at a constant low temperature, an adsorption capacity of a gas on a solid surface was determined at different relative pressures, a monolayer adsorption capacity of a sample was obtained based on a Brunauer-Emmett-Teller adsorption theory and a formula thereof (BET formula), and the specific surface area of a material was calculated.
(2) Test method for the tap density:
   The tap density (Better tap) of a powder was tested by a DAT-6-220 powder tap density tester of Quantachrome of the United States. According to the national standard GB/T 5162-2006/ISO 3953:1993, a certain amount of a sample was weighed and vibrated for 3,000 times at 300 times/min to test the tap density.
(3) Test method for the oxygen content and carbon content:
   The oxygen content was measured by a Nicolet Is10 Fourier infrared spectrometer of Thermo Fisher of the United States, and the carbon layer content was measured by a thermogravimetric analysis method.
(4) SEM test:
   Scanning electron microscopy characterization was performed on an S4800 field emission electron microscope of Hitachi of Japan at an operating voltage of 200 kV to observe a structure of an anode material and gauge a thickness of a coating layer.
(5) Test method for the average particle size of primary particles and a secondary particle:
   The average particle size of particles was measured by an E3500 ion grinder and an S4800 field emission electron microscope of Hitachi of Japan.
(6) Test method for the average particle size of silicon grains:
   An XRD pattern of a sample was measured by a TD-3600 X-ray diffractometer of Dandong Tongda Company of China, a half-peak height width of a diffraction peak of the sample and a corresponding Bragg angle were obtained by jade software, and the average grain size of nano-silicon was calculated according to a Scherer formula, D=Kγ/B cosθ.
(7) Test method for the thickness of a conductive layer and a coating layer:
   A material was subjected to section processing by an E3500 ion grinder and an S4800 field emission electron microscope of Hitachi of Japan, and the layer thickness of a particle modification layer and a protective layer was measured by SEM.
(8) Test method for the particle size of an anode material:
   D50 was measured by a laser particle size analyzer, which had symmetrical distribution like normal distribution. In volume reference distribution, a 50% cumulative diameter was D50, similarly, a 90% cumulative diameter was D90, and a 10% cumulative diameter was D10.

After the above tests, the anode materials prepared in Embodiments 1-13 correspondingly had a sample number of S1 to S13. Performance parameters of the anode materials were described in Table 1.

**Table 1**

| Perfor manc e param eters | S1 | S2 | S3 | S4 | S5 | S6 | S7 | S8 | S9 | S10 | S11 | S12 | S13 |
|---|---|---|---|---|---|---|---|---|---|---|---|---|---|
| Media n particl e size of an anode materi al (D50, µm) | 5 | 8 | 6 | 6 | 6 | 6 | 6 | 6 | 6 | 5.5 | 12 | 6 | 0.1 |
| Specif ic surfac e area (m²/g) | 5 | 8 | 7 | 9 | 4 | 7.2 | 5.8 | 4.5 | 6 | 11 | 4 | 4 | 55 |
| Tap densit y (g/cm³ ) | 0.8 | 0.85 | 1.2 | 1.2 | 1.1 | 1.3 | 1.33 | 1.12 | 1.15 | 0.8 | 1.1 | 1.1 | 0.2 |
| Comp action density (g/cm³ ) | 1.2 | 1.38 | 1.58 | 1.58 | 1.5 | 1.62 | 1.61 | 1.55 | 1.5 | 0.9 | 1.38 | 1.38 | 0.85 |
| Oxyge n conte nt (%) | 5 | 8 | 14 | 14 | 4 | 14 | 13 | 12 | 11 | 6.2 | 14 | 14 | 10 |
| Total carbo n conte nt (%) | 25 | 35 | 45 | 45 | 55 | 45 | 42 | 46 | 45 | 60 | 45 | 45 | 25 |
| Avera ge particl e size of silicon primar y nanop article s (nm) | 50 | 100 | 50 | 60 | 60 | 50 | 150 | 180 | 80 | 50 | 25 | 250 | 25 |
| Avera ge particl e size of single grains (nm) | 5 | 11 | 5 | 60 | 60 | 5 | 10 | 20 | 15 | 6 | 2 | 1.11 | 5 |
| Crysta llinity (A) of primary particl es | 10 | 9.1 | 10 | 1 | 1 | 10 | 15 | 9 | 5.3 | 8.3 | 12.5 | 225 | 5 |
| Bulkin g densit y (B) of a secon dary particl e | 98 | 79.1 | 118 | 98.3 | 98.3 | 120 | 40 | 33.3 | 75 | 89 | 476 | 23.6 | 4 |
| Thick ness of a condu cive layer (nm) | 10 | 20 | 5 | 5 | 15 | 8 | 3 | 2 | 5 | / | 5 | 5 | / |
| Thick ness of a coatin g layer (nm) | 10 0 | 90 | 100 | 100 | 100 | 100 | 80 | 50 | 110 | / | 100 | 100 | / |

(10) Electrochemical test:
The anode materials, sodium carboxymethyl cellulose, styrene butadiene rubber, conductive graphite (KS-6), and carbon black (SP) were prepared into slurries at a ratio of 92:2:2:2:2, respectively, then evenly coated on copper foil, and dried to prepare anode sheets. Button batteries were assembled in a glove box under an argon atmosphere with a polypropylene microporous membrane as a diaphragm, 1 mol/L lithium hexafluorophosphate (a solvent was a mixture of vinyl carbonate, methyl ethyl carbonate, and dimethyl carbonate) as an electrolyte, and a metallic lithium sheet as a counter electrode.

A specific discharge capacity test was carried out on the above 13 groups of batteries on a LAND CT2001A battery test system, and a ratio of a discharge capacity to a battery capacity within 1 hour was a specific discharge capacity.

An initial coulombic efficiency test was carried out on the above 13 groups of batteries on the LAND CT2001A battery test system, and the initial coulombic efficiency was measured at a charge and discharge current of 0.05 C.

A 100 cycle test was carried out on the above 13 groups of batteries on the LAND CT2001A battery test system, and the post-cycle capacity and post-cycle capacity retention rate of the batteries after 100 cycles were tested and calculated at a charge and discharge current of 0.2 C.

The capacity retention rate after 100 cycles at 0.2 C was equal to a discharge capacity of a 100th cycle/a discharge capacity of a first cycle*100%. Results were shown in Table 2.

**Table 2 Comparison table of parameters and performance of various batteries**

| Sample | Specific discharge capacity (mAh/g) | Initial coulombic efficiency (%) | Capacity after 200 cycles at 1 A/g (mAh/g) | Capacity retention rate after 200 cycles at 1 A/g (%) | Expansion rate of an electrode membrane (%) |
|---|---|---|---|---|---|
| S1 | 2590 | 89.1 | 1255 | 75 | 23.4 |
| S2 | 2500 | 86.6 | 990 | 72.4 | 24.7 |
| S3 | 2250 | 84.7 | 905 | 72.5 | 26.6 |
| S4 | 2130 | 83.1 | 914 | 68.6 | 24.5 |
| S5 | 2340 | 83.4 | 955 | 70.1 | 33.6 |
| S6 | 2240 | 84.2 | 925 | 73.5 | 27.6 |
| S7 | 2230 | 83.7 | 901 | 72.1 | 27.1 |
| S8 | 2258 | 85.8 | 935 | 74.6 | 25.5 |
| S9 | 2235 | 85.6 | 900 | 72.1 | 26.9 |
| S10 | 2460 | 86.7 | 858 | 65.2 | 22.8 |
| S11 | 2160 | 79.5 | 708 | 61.5 | 35.1 |
| S12 | 2188 | 78.8 | 689 | 60.1 | 36.5 |
| S13 | 2088 | 76.2 | 677 | 55.8 | 38.1 |

As shown in Table 2, for the anode materials prepared in Embodiments 1 to 9, by controlling a relationship between the size of the silicon primary nanoparticles and the size of the silicon grains, stress concentration caused by the silicon primary nanoparticles in a lithiation process could be reduced, and the structural stability of the silicon primary nanoparticles was improved. By controlling a relationship between the size of the secondary particle and the size of the silicon primary nanoparticles, the structural stability of the anode material in a lithiation process could be improved, the expansion rate of the material was reduced, and convenience was provided for forming a stable solid electrolyte membrane on the surface of the anode material. By constructing the conductive layers on the surfaces of the silicon primary nanoparticles, constructing the coating layer on the surface of the secondary particle, cooperatively modifying the anode material with the conductive layers and the coating layer and utilizing the conductivity of the conductive layer and the effect of relieving the volume expansion of silicon nanoscale primary particles to ensure that the anode material still had excellent electrical contact performance after lithium intercalation. By combing with the outermost coating layer, side reactions between the silicon primary nanoparticles and an electrolyte could be effectively reduced, and meanwhile, the structural stability of the anode material was enhanced, such that a battery prepared from the anode material had low expansion, high cycle stability, high rate performance, and initial coulombic efficiency.

Since the surfaces of the primary particles of the anode material in Embodiment 10 were free of conductive layers and the surface of the secondary particle was also free of a coating layer, although the initial coulombic efficiency of the anode material was similar to that in Embodiment 1, the cycle capacity retention rate and the capacity after 200 cycles were decreased compared with those in Embodiment 1, this was because due to the lack of protection of the coating layer, side reactions between an electrolyte and the anode material were increased, the volume expansion of the anode material was increased, and the electrochemical performance was obviously reduced.

In a preparation process of the anode material in Embodiment 11, the bulking density (B) of the secondary particle was too large, indicating that the size of the silicon primary nanoparticles was too small, which will led to increase of the specific surface area of the secondary particle and increase of the specific surface area of the anode material. In a lithium intercalation/deintercalation process of the anode material, side reactions between the anode material and an electrolyte were increased, and consumed active lithium ions were increased, leading to decrease of the initial coulombic efficiency of the battery prepared from the anode material.

In a preparation process of the anode material in Embodiment 12, the crystallinity (A) of the silicon primary nanoparticles was too large, indicating that the size of the silicon grains was too small, electrochemical sintering easily occurred on the surfaces of the silicon primary nanoparticles, and the silicon grains grow after the sintering. After lithium intercalation of the anode material, the local stress of the silicon primary nanoparticles was increased, and the instability of the entire structure was increased, leading to decrease of the cycle performance and capacity of the anode material and deterioration of the electrochemical performance of the anode material.

In a preparation process of the anode material in Embodiment 13, the bulking density (B) of the secondary particle was too small, the size of the silicon primary nanoparticles was too large, and the expansion stress of the secondary particle was more concentrated, easily leading to disintegration and pulverization of the secondary particle, inconvenience for improving the structural stability of the anode material, and decrease of the cycle stability of the battery prepared from the anode material.

The applicant declares that detailed process devices and process flows of the present disclosure are described through the foregoing embodiments, but the present disclosure is not limited to the foregoing detailed process devices and process flows, that is, not meaning that the present disclosure can only be implemented by relying on the foregoing detailed process devices and process flows. Those skilled in the art should understand that any improvements of the present disclosure, equivalent substitutions of various raw materials of products in the present disclosure as well as additions of auxiliary components, selections of specific embodiments, etc., fall within the scope of protection and the scope of disclosure of the present disclosure.

## Claims

1. An anode material, wherein the anode material comprises a secondary particle, and the secondary particle comprises silicon primary nanoparticles;
the silicon primary nanoparticles comprise at least one silicon grain, an average particle size of the silicon grains is Ds nm, and an average particle size of the silicon primary nanoparticles is Dn nm;
a crystallinity of the silicon primary nanoparticles is A, the A is equal to Dn/Ds, and the A is equal to or greater than 1 and equal to or less than 200.

2. The anode material according to claim 1, wherein the crystallinity (A) of the silicon primary nanoparticles is equal to 1, and the silicon primary nanoparticles are monocrystalline silicon.

3. The anode material according to claim 1, wherein the crystallinity (A) of the silicon primary nanoparticles is greater than 1 and equal to or less than 200, and the silicon primary nanoparticles comprise polycrystalline silicon.

4. The anode material according to claim 1, wherein the anode material comprises at least one of the following features:
(1) the average particle size of the silicon grains is Ds nm, and the Ds is equal to or greater than 1 and equal to or less than 100;
(2) the average particle size of the silicon primary nanoparticles is Dn nm, and the Dn is equal to or greater than 1 and equal to or less than 200.

5. The anode material according to any one of claims 1-4, wherein an average particle size of the secondary particle is Dm nm; and a bulking density of the secondary particle is B, the B is equal to Dm/Dn, and the B is equal to or greater than 5 and equal to or less than 400.

6. The anode material according to claim 5, wherein the average particle size of the secondary particle is Dm nm, and the Dm is equal to or greater than 500 and equal to or less than 25,000.

7. The anode material according to claim 1, wherein the anode material further comprises conductive layers located on at least partial surfaces of the silicon primary nanoparticles.

8. The anode material according to claim 7, wherein the anode material meets at least one of the following features:
(1) the conductive layers comprise at least one of an amorphous carbon material, a graphitized carbon material, and a conductive ceramic material;
(2) the conductive layers comprise a graphitized carbon material, the graphitized carbon material is graphene, and a layer number of the graphene is less than 20;
(3) a thickness of the conductive layers is 1 nm-200 nm;
(4) the conductive layers comprise a conductive ceramic material, and the conductive ceramic material comprises at least one of a metal oxide, a transition metal nitride, or a sulfide;
(5) the conductive layers comprise a conductive ceramic material, the conductive ceramic material comprises a metal oxide, and the metal oxide comprises at least one of V₂O₅, TiO₂, Nb₂O₅, CdO, CsO, MoO₃, WO₃, BaO, SnO₂, Cr₂O₃, MnO, Ag₂O, CoO, NiO, Cu₂O, and SnO;
(6) the conductive layers comprise a conductive ceramic material, the conductive ceramic material comprises a transition metal nitride, and the transition metal nitride comprises at least one of VN, TiN, CoN, Fe₃N, Co₄N, and WN.

9. The anode material according to claim 1, wherein the anode material further comprises a coating layer located on at least a partial surface of the secondary particle, and the coating layer comprises at least one of an amorphous carbon material, a graphitized carbon material, and a polymer; and the anode material meets at least one of the following features:
(1) a mass content of carbon in the anode material is 5%-80%;
(2) the coating layer comprises a polymer, and the polymer comprises at least one of polyacrylic acid, polyacrylonitrile, polyimide, polyurethane, polydopamine, xanthan gum, polypyrrole, polythiophene, polyphenylacetylene, polyaniline, polyacetylene, and tannic acid;
(3) the coating layer comprises a polymer, and a mass content of the polymer in the anode material is 1%-20%;
(4) the coating layer comprises a graphitized carbon material, and a thickness of the coating layer is 5 nm-100 nm;
(5) the coating layer comprises an amorphous carbon material, and a thickness of the coating layer is 10 nm-500 nm;
(6) the coating layer comprises a polymer, and a thickness of the coating layer is 5 nm-300 nm.

10. The anode material according to claim 1, wherein a powder tap density of the anode material is 0.3 g/cm³-1.3 g/cm³.

11. The anode material according to claim 1, wherein a powder compaction density of the anode material is 1.2 g/cm³-1.8 g/cm³.

12. The anode material according to claim 1, wherein a median particle size of the anode material is 0.5 µm-25 µm.

13. The anode material according to claim 1, wherein a specific surface area of the anode material is 1.0 m²/g-50 m²/g.

14. The anode material according to claim 1, wherein a mass content of oxygen in the anode material is less than 15%.

15. A battery, wherein the battery comprises the anode material according to any one of claims 1-14.
